# FASCICULE DE BREVET EUROPEEN

(11) **EP 3 505 425 B1**
(45) Date de publication et mention de la délivrance du brevet: **24.02.2021**
(21) Numéro de dépôt: 18248098.8
(22) Date de dépôt: 27.12.2018
(51) Int. Cl.: B62D 25/20, B62D 29/04

(54) **TRAITEMENT LOCAL SUR PLANCHER MONOPEAU DES ENTRÉES ET DIFFUSIONS D' EFFORT EN CHOC LATÉRAL**
LOKALE BEHANDLUNG AUF EINSCHICHTBODEN DER EINGÄNGE UND VERTEILUNG DER BELASTUNG BEI SEITLICHEM AUFPRALL
LOCAL TREATMENT ON SINGLE-LAYER FLOOR OF ENTRY AND SPREADING OF FORCE IN THE EVENT OF A LATERAL COLLISION

(30) Priorité: 27.12.2017 FR 1763256
(43) Date de publication de la demande: 03.07.2019
(73) Titulaire: Compagnie Plastic Omnium, 69007 Lyon (FR)
(72) Inventeur: JUILLARD, Pierre, 69330 MEYZIEU (FR); PIERROT, Frédéric, 01500 Amberieu en Bugey (FR); MASSON, Sébastien, 38460 CREMIEU (FR)
(74) Mandataire: LLR

(56) Documents cités:
- EP-A2- 2 598 394
- WO-A1-2016/012663
- WO-A2-2017/046217
- FR-A- 1 137 219
- FR-A1- 3 022 520
- US-A- 5 020 846

## Description

L'invention concerne le domaine des véhicules automobiles, et plus particulièrement la problématique de l'absorption de chocs latéraux d'un véhicule automobile.

L'invention concerne notamment un plancher avant structurel de véhicule réalisée en matière plastique et participant efficacement à l'absorption de chocs latéraux d'un véhicule automobile.

On appelle plancher avant structurel de véhicule la partie du plancher comprise entre l'avant du véhicule et la première rangée de siège, cette partie comprenant les fixations de siège avant.

Un plancher avant de véhicule automobile à usage routier classique avec un moteur à l'avant comprend généralement un tunnel longitudinal pour le passage notamment d'un tuyau d'échappement, d'un arbre de transmission et/ou de conduits. Un tel plancher de véhicule comprend des panneaux latéraux horizontaux joignant le tunnel central avec les longerons de bas de caisse.

La conception du véhicule doit satisfaire à un cahier des charges complexe incluant notamment des tests de choc. Parmi ces tests il existe le test de choc latéral, notamment le test de choc latéral contre un poteau.

Lors d'un tel test de choc latéral d'un véhicule automobile contre un poteau fixe à 30km/h, le véhicule est monté sur une plateforme lancée dans une direction perpendiculaire à l'axe longitudinal du véhicule, de manière à ce que le véhicule percute latéralement un poteau, au niveau d'un siège de passager.

La déformation du véhicule engendre des risques importants de blessures au passager.

Les structures de planchers avant dans l'automobile reposent actuellement toutes sur un assemblage de pièces métalliques et/ou composites. Des exemples connus de planchers en aciers pour des véhicules automobiles requièrent l'assemblage de cinq à dix pièces en acier, pour répondre aux fonctionnalités et aux contraintes liées à ce périmètre : nécessité d'avoir des corps creux pour tenir les efforts en cas de choc, nécessité d'offrir les surfaces d'appui et les accroches nécessaires aux équipements, nécessité de dégager des espaces nécessaires pour la bonne assise des passagers et du conducteur (espace pour les pieds, fixations de rails de sièges...), nécessité de dégager de l'espace pour permettre au conduits d'échappements de passer sous le plancher en zone centrale et pour permettre le passage des conduits d'air conditionné dans l'habitacle, etc...

Par ailleurs, les constructeurs font face à des réglementations également plus strictes au niveau de la consommation, notamment en CO2, ce qui les pousse à réaliser des véhicules plus légers, notamment les planchers, qui doivent alors aussi être plus légers et à iso-performance mécanique, en particulier sous les sollicitations d'un choc latéral. Le document WO2017/046217 décrit un plancher de véhicule automobile comportant un panneau principal en matière composite, le panneau comprenant deux appuis latéraux destinés à être fixés à des longerons. Le document WO2016/012663 décrit un plancher comprenant un panneau principal en matière plastique qui comprend deux appuis latéraux destinés à être fixés à un châssis.

De plus, les solutions actuelles reposant sur un ensemble de pièces (métalliques ou composites) présentent des complexités élevées d'assemblage. De nombreux postes sont nécessaires, ce qui représente un temps de procédé de fabrication élevé et un coût important. D'autre part, les solutions métalliques en particulier, présentent une masse importante, et donc entraînent une dégradation de la performance énergétique globale du véhicule.

L'invention a pour but de remédier à ces inconvénients en fournissant un plancher avant en matière composite réalisé par une seule étape de moulage en une seule pièce (plancher mono-peau), réduisant ainsi drastiquement la complexité de son assemblage sur la chaîne de production des constructeurs automobiles.

Ainsi, l'objet de l'invention concerne un plancher de véhicule automobile qui comporte un panneau principal en matière composite, le panneau comprenant deux appuis latéraux destinés à être fixés à des longerons, le profil du panneau formant un décrochement au niveau de chaque appui latéral, le panneau comportant en outre des nervures s'étendant entre un appui latéral et l'autre appui latéral, les nervures du plancher s'étendant verticalement vers le bas depuis une surface inférieure du panneau principal.

Lors d'un choc latéral, cette conception du plancher permet de mettre en oeuvre une transmission des efforts mécaniques dans le plancher composite mono-peau dont la résistance est augmentée par les nervures transversales. En effet, en cas de choc latéral le longeron du véhicule et l'appui latéral du plancher se déforment quasi simultanément. Lors de cette première étape de la chronologie de choc, cette déformation met quasi instantanément en contact le longeron contre une partie sensiblement verticale du décrochement du profil du panneau. Le contact surfacique créé entre ces deux pièces transmet les efforts mécaniques dus au choc dans les épaisseurs du plancher se trouvant en regard, ces épaisseurs étant constituées du panneau principal du plancher et des nervures. Ainsi, les efforts mécaniques sont transmis transversalement vers une partie centrale du plancher, puis vers un côté opposé du plancher. Les nervures du plancher permettent d'augmenter la section longitudinale de matière se trouvant en face de la zone d'impact. Donc, avec une section plus grande, un même effort dû au choc génère des contraintes plus faibles dans le matériau. On augmente donc la résistance mécanique du plancher sans augmenter l'épaisseur de la paroi principale de celui-ci.

On peut donc prévoir une épaisseur du panneau qui ne soit pas trop grande au niveau de cette interface tout en satisfaisant le critère de résistance aux chocs. Une épaisseur trop forte rendrait le processus de fabrication trop long pour rendre possible à une échelle industrielle et à un coût réduit la fabrication du panneau en matière composite. Une forte épaisseur engendre également des risques de délaminages prématurés du matériau composite plus important.

Le plancher avant selon l'invention peut également comprendre, une ou plusieurs des caractéristiques suivantes :
- le panneau forme au moins un podium surélevé par rapport aux appuis latéraux, le podium rejoignant les appuis latéraux par un ou plusieurs flancs latéraux et étant apte à servir de zone d'implantation à des sièges ;
- les flancs latéraux longent chacun un longeron de véhicule automobile, lorsque les appuis latéraux sont fixés à des longerons de véhicule automobile ;
- le panneau principal est réalisé en matière composite mono-peau ;
- au moins une des nervures s'étend suivant une direction transversale d'un véhicule, lorsque le plancher est assemblé sur un véhicule automobile ;
- au moins une nervure s'étend d'un flanc latéral à l'autre du plancher ;
- au moins un décaissé s'étend d'un flanc latéral à l'autre du plancher ;
- le plancher comporte un tunnel central ;
- les nervures contournent le tunnel central ;
- les nervures sont aptes à diffuser dans la matière composite les efforts transmis par le longeron en cas de choc latéral subi par le véhicule sur lequel le plancher est monté ;
- les décaissés sont aptes à diffuser dans la matière composite les efforts transmis par le longeron en cas de choc latéral subi par le véhicule sur lequel le plancher est monté.

L'invention sera mieux comprise à la lecture des figures annexées, qui sont fournies à titre d'exemples et ne présentent aucun caractère limitatif, dans lesquelles :
- la figure 1 représente, vue de dessus, un plancher mono-peau composite selon l'invention ;
- la figure 2 est une vue isométrique d'une partie d'un plancher mono-peau composite suivant l'invention ;
- la figure 3 est une section partielle A-Adu plancher de la figure 2, dans un plan en X;
- la figure 4 est une section partielle B-B du plancher de la figure 2, dans un plan en Y.

Dans ce qui suit, les termes tels que « axe longitudinal X », « axe transversal Y », « axe vertical Z », « avant », « arrière », « au-dessus », « supérieur », « en-dessous », « inférieur », etc. s'entendent par référence à l'orientation usuelle des véhicules automobiles selon les repères représentés sur les figures.

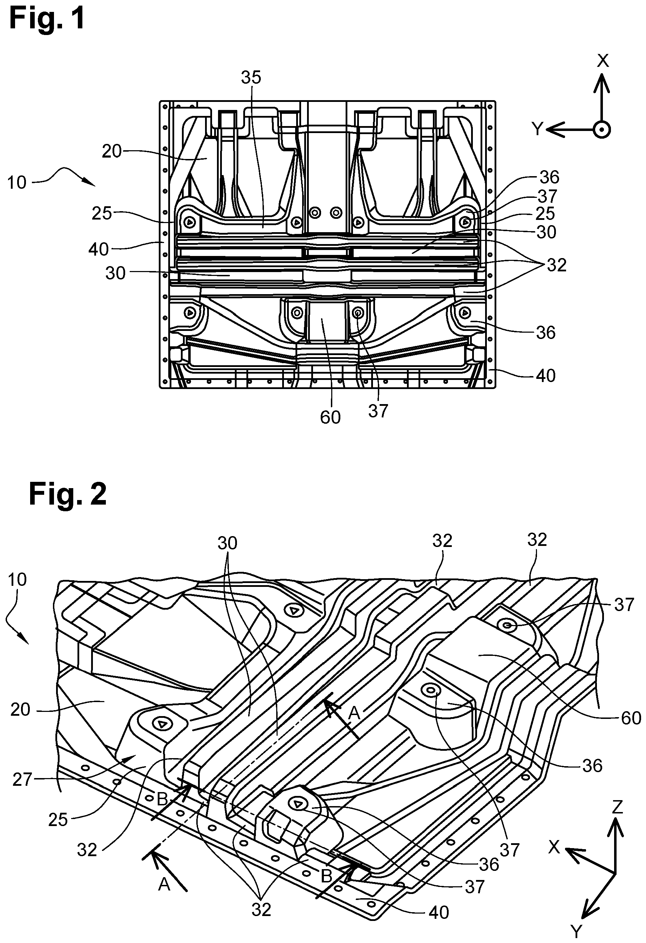

On se réfère maintenant à la figure 1 qui illustre, selon une vue de dessus, un exemple de plancher avant 10 selon l'invention.

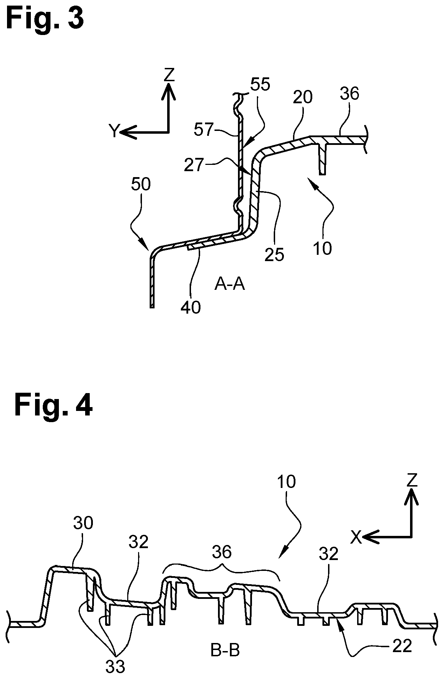

Le plancher 10 comporte un panneau horizontal principal 20 en matière composite. Le panneau principal 20 comprend également deux appuis latéraux 40. Ces appuis 40 situés aux deux extrémités latérales du plancher 10 sont de forme plane, orientés horizontalement et sont destiné à être fixés à un longeron 50 de véhicule automobile (visible en figure 3), de préférence en dessous d'une surface orientée horizontalement de celui-ci. Ils sont fixés au longeron 50 par exemple par rivetage ou soudure.

De manière avantageuse, le plancher 10 dans son ensemble peut être formé d'un unique panneau principal 20 mono-peau en matière composite. Par panneau unique on entend que le plancher 10 ne résulte pas de l'assemblage de plusieurs panneaux 20. Cette disposition permet d'avoir un plancher monobloc obtenu par un seul cycle de moulage, donc en une seule compression à la presse, en matériau composite.

Le plancher 10 comprend au moins un podium 30. Le plancher de la figure 1 en comprend deux. Plus précisément, c'est le panneau principal 20 qui forme chaque podium 30. Chaque podium 30 est surélevé par rapport aux appuis latéraux 40. Il comprend un plan supérieur 35, qui comprend plusieurs parties surélevées 36 par rapport aux appuis latéraux 40 du plancher. 10 ; qui sont comprises dans un même plan supérieur 35. Des moyens de fixation de siège 37 sont aménagés dans ces parties surélevées. Ainsi, une fois le plancher 10 assemblé sur le véhicule, des sièges peuvent être fixés, par exemple par vissage, sur le plancher 10.

Des flancs latéraux 25 rejoignent les appuis latéraux 40 par des surfaces inclinée 27. Ces surfaces 27 s'étendent entre les parties surélevées 36 du podium 30 et des appuis latéraux 40 du plancher 10.

Cette géométrie du plancher 10 est illustrée par la figure 3, qui est une coupe suivant la section A-A montrée en figure 2. Comme on peut le voir sur cette figure, le flanc latéral 25 du podium 30 rejoint par l'appui 40 le longeron 50 du véhicule, sur lequel il est fixé. Ce flanc 25 est situé à proximité directe du longeron 50 et est orienté quasiment verticalement. Par le terme proximité directe, on entend que le flanc 25 se situe à une distance inférieure à 20 millimètres d'une surface de contact 55 verticale du longeron 50. De préférence, cette distance est inférieure à 10 millimètres, voire inférieure à 5 millimètres. De même, une surface de contact 55 du longeron 50 est elle aussi orientée verticalement. Ainsi, comme nous le verrons plus loin, le flan latéral 25 du plancher 10 est géométriquement placé pour s'appuyer sur le longeron 50 si le véhicule subi un choc latéral.

Le plancher 10 comprend des décaissés 32 qui traversent le podium 30. On appelle décaissé une dépression à la surface d'un élément d'allure générale plane. Ainsi les décaissé 32 constituent des dépressions à la surface d'un plan moyen du panneau principal 20.

Ces décaissés 32 forment des gorges en U sont orientées suivant la direction transversale Y du véhicule.

La présence de ce décaissé permet d'augmenter la résistance mécanique du panneau 20, et donc du plancher 10. En effet, une telle forme permet d'une part d'augmenter la section transversale en épaisseur du panneau 20, et donc de mieux répartir les efforts dans l'épaisseur de celui-ci. De plus, cette géométrie permet de limiter le flambage du panneau principal.

Avantageusement, ces décaissés s'étendent d'un flanc latéral 25 du plancher 10 à l'autre, dans la direction transversale Y du véhicule. Ainsi, en cas de choc latéral, les décaissés 32 sont aptes à transmettre des efforts mécaniques transversaux dans tout le plancher, d'un bord latéral (qui entre contact avec le longeron 50 comme nous le verrons plus tard) à l'autre. Ces décaissés sont visibles en figure 4, qui est une coupe du plancher 10 suivant la section B-B de la figure 2.

Le plancher 10 comporte aussi un tunnel 60 pour le passage notamment pour le passage d'un tuyau d'échappement, d'un arbre de transmission et/ou de conduits, qui traverse le plancher 10 de part en part suivant sa direction longitudinale X.

Avantageusement, les décaissés contournent le tunnel 60.

De cette manière, la résistance aux efforts mécaniques transversaux du tunnel, qui peut représenter une partie moins rigide dans cette direction du plancher 10, est augmentée.

La paroi 20 comprend des nervures 33 qui courent tout le long de la face inférieure du plancher suivant la direction transversale Y du véhicule. Ces nervures 33 s'étendent suivant la direction verticale Z depuis la face inférieure 22 du panneau 20. Elles sont situées sur la partie du plancher 10 situé en entre les deux appuis latéraux 40 de celui-ci.

La présence de ces nervure 33 permet d'augmenter la résistance mécanique du panneau 20, et donc du plancher 10. En effet, elles permettent d'une part d'augmenter la section du panneau 20, et donc de mieux répartir les efforts dans celui-ci. De plus, cette géométrie permet de limiter le flambage du panneau principal.

Avantageusement, ces nervures s'étendent d'un flan latéral 25 du plancher 10 à l'autre, dans la direction transversale Y du véhicule. Ainsi, en cas de choc latéral, les nervures 33 sont aptes à transmettre des efforts mécaniques transversaux dans tout le plancher, d'un bord latéral (qui est entre contact avec le longeron 50 en cas de choc latéral comme nous le verrons plus tard) à l'autre. Ces nervures sont visibles en figure 4, qui est une coupe du plancher 10 suivant la section B-B de la figure 2.

L'orientation des nervures suivant la direction transversale Y (dans le sens des efforts mécaniques dus à un choc latéral) est avantageuse car elle permet une meilleure reprise de ces efforts dans le plancher 10.

Avantageusement, elles s'étendent verticalement vers le bas depuis une surface inférieure du panneau 20. De cette manière, elles ne gênent pas l'installation d'éléments sur le plancher 10, tels que des sièges par exemple.

Nous allons maintenant expliquer le déroulement d'un choc latéral, et le rôle des différents éléments décrits précédemment.

En cas de choc latéral, le longeron 50 du véhicule et l'appui latéral 40 du plancher 10 se déforment quasi simultanément. Lors de cette première étape de la chronologie de choc, cette déformation met très rapidement en contact le longeron 50 avec le flan latéral 25 du podium. Ce contact surfacique entre ces deux pièces est permis par leur proximité, donc par le très faible écart géométrique présent entre la surface de contact 55 du longeron 50 et le flanc latéral 25, avant toute déformation due au choc. Le contact surfacique créé entre ces deux pièces transmet les efforts mécaniques dus au choc dans les épaisseurs du plancher 10 se trouvant en regard, ces épaisseurs étant constituées du panneau principal 20 du plancher 10, des nervures 33 et de flancs des décaissés 32. Ainsi, les efforts mécaniques sont transmis transversalement vers la partie centrale du plancher 10, puis vers le côté opposé de celui-ci. Les nervures 33 et décaissés 32 transversaux situés dans les podiums 30 du plancher 10 permettent d'augmenter la section longitudinale de matière se trouvant en face de la zone d'impact.

Lors d'un choc latéral, cette conception du podium permet donc de mettre en œuvre une transmission des efforts mécaniques dans le plancher 10 composites mono-peau dont la résistance est augmentée par les décaissés 32 et les nervures 33 transversaux.

Ainsi, les efforts se transmettant directement dans la partie centrale du plancher 10, cela permet de ne pas solliciter outre mesure la fixation du plancher 10 (au niveau de ses appuis latéraux 40) avec le longeron.

En effet, les nervures 33 et décaissés 32, alliés à ce séquencement particulier de choc entre le longeron et la paroi latérale du podium, permettent de satisfaire aux exigences de résistance en cas de choc latéral imposées par les normes tout en utilisant une épaisseur de panneau mono-peau suffisamment faible pour une fabrication industrielle. La fabrication d'un panneau en matériau composite mono-peau d'épaisseur faible permet d'éviter d'une des problèmes de délaminage, et d'autre part des temps de cuisson trop longs.

Bien entendu l'invention ne se limite aux modes de réalisation présentés.

### Nomenclature :

10 : plancher avant de véhicule automobile
20 : panneau principal
22 : face inférieure du panneau principal
25 : flanc latéral
27 : surface inclinée
30 : podium
32 : décaissé
33 : nervure
35 : plan supérieur
36 : partie surélevée
37 : moyen de fixation de siège de véhicule automobile
40 : appui latéral
50 : longeron de véhicule automobile
55 : surface de contact du longeron
57 : paroi verticale de longeron
60 : tunnel central

## Revendications

1. Plancher (10) de véhicule automobile **caractérisé en ce qu'**il comporte un panneau principal (20) en matière composite, la panneau (20) comprenant deux appuis latéraux (40) destinés à être fixés à des longerons (50), le profil du panneau (20) formant un décrochement au niveau de chaque appui latéral (40), le panneau (20) comportant en outre des nervures (33) s'étendant entre un appui latéral (40) et l'autre appui latéral (40), les nervures (33) du plancher s'étendant verticalement vers le bas depuis une surface inférieure du panneau principal (20).

2. Plancher (10) selon la revendication précédente dans lequel le panneau (20) forme au moins un podium (30) surélevé par rapport aux appuis latéraux (40), le podium (30) rejoignant les appuis latéraux par un ou plusieurs flancs latéraux (25) et étant apte à servir de zone d'implantation à des sièges.

3. Plancher (10) selon la revendication précédente dans lequel les flancs latéraux (25) longent chacun un longeron de véhicule automobile, lorsque les appuis latéraux sont fixés à des longerons (50) de véhicule automobile.

4. Plancher (10) selon l'une des revendications précédentes dans lequel le panneau principal (20) est réalisé en matière composite mono-peau.

5. Plancher selon l'une des revendications précédentes dans lequel au moins une des nervures (33) s'étend suivant une direction transversale d'un véhicule, lorsque le plancher est assemblé sur un véhicule automobile.

6. Plancher (10) selon l'une des revendications 2 à 5 dans lequel au moins une nervure (33) s'étend d'un flanc latéral (25) à l'autre du plancher (10).

7. Plancher (10) selon l'une des revendications 2 à 6 dans lequel au moins un décaissé (32) s'étend d'un flanc latéral (25) à l'autre du plancher (10).

8. Plancher (10) selon l'une des revendications précédentes qui comporte un tunnel central (60).

9. Plancher (10) selon la revendication précédente dans lequel les nervures (33) contournent le tunnel central (60).

10. Plancher (10) selon les revendications 7, 8 et/ou 9 dans lequel les décaissés (32) contournent le tunnel central (60).

11. Plancher (10) selon l'une des revendications précédentes dans lequel les nervures (33) sont aptes à diffuser dans la matière composite les efforts transmis par le longeron en cas de choc latéral subi par le véhicule sur lequel le plancher (10) est monté.

12. Plancher (10) selon l'une des revendications 9 à 11 dans lequel les décaissés (32) sont aptes à diffuser dans la matière composite les efforts transmis par le longeron en cas de choc latéral subi par le véhicule sur lequel le plancher (10) est monté.

## Patentansprüche

1. Boden (10) eines Kraftfahrzeugs, **dadurch gekennzeichnet, dass** er eine Hauptplatte (20) aus einem Verbundwerkstoff umfasst, wobei die Platte (20) zwei Seitenstützen (40) umfasst, die eingerichtet sind an Längsträgern (50) befestigt zu sein, wobei das Profil der Platte (20) auf der Höhe von jeder Seitenstütze (40) eine Ausbuchtung ausbildet, wobei die Platte (20) ferner Rippen (33) aufweist, die sich zwischen einer Seitenstütze (40) und der anderen Seitenstütze (40) erstrecken, wobei sich die Rippen (33) des Bodens von einer Unterseite der Hauptplatte (20) vertikal nach unten erstrecken.

2. Boden (10) gemäß dem vorhergehenden Anspruch, wobei die Platte (20) zumindest ein Podium (30) ausbildet, das hinsichtlich der Seitenstützen (40) erhöht angeordnet ist, wobei das Podium (30) die Seitenstützen durch eine oder mehrere Seitenflanken (25) verbindet und eingerichtet ist als Sitzplatzfläche zu dienen.

3. Boden (10) gemäß dem vorstehenden Anspruch, wobei jede der Seitenflanken (25) an einem Längsträger des Kraftfahrzeugs entlangläuft, wenn die Seitenstützen (40) an den Längsträgern (50) des Kraftfahrzeugs befestigt sind.

4. Boden (10) gemäß einem der vorstehenden Ansprüche, wobei die Hauptplatte (20) aus einem einlagigen (mono-peau) Verbundwerkstoff hergestellt ist.

5. Boden (10) gemäß einem der vorstehenden Ansprüche, wobei zumindest eine der Rippen (33) sich in einer Querrichtung des Fahrzeugs erstreckt, wenn der Boden an einem Kraftfahrzeug montiert ist.

6. Boden (10) gemäß einem der Ansprüche 2 bis 5, wobei zumindest eine Rippe (3) sich von einer Seitenflanke (25) des Bodens (10) zur anderen erstreckt.

7. Boden (10) gemäß einem der Ansprüche 2 bis 6, wobei sich zumindest eine Vertiefung (32) von einer Seitenflanke (25) des Bodens (10) zur anderen erstreckt.

8. Boden (10) gemäß einem der vorhergehenden Ansprüche, wobei der Boden (10) einen Mitteltunnel (60) umfasst.

9. Boden (10) gemäß einem der vorhergehenden Ansprüche, wobei die Rippen (33) um den Mitteltunnel (60) herumführen.

10. Boden (10) gemäß einem der Ansprüche 7 bis 9, wobei die Vertiefungen (32) um den Mitteltunnel (60) herumführen.

11. Boden (10) gemäß einem der vorhergehenden Ansprüche, wobei die Rippen (33) eingerichtet sind, im Fall eines Seitenaufpralls auf das Fahrzeug, an dem der Boden (10) montiert ist, die von dem Längsträger übertragenen Kräfte in dem Verbundwerkstoff zu verteilen.

12. Boden (10) gemäß einem der Ansprüche 9 bis 11, wobei die Vertiefungen (32) eingerichtet sind, im Fall eines Seitenaufpralls auf das Fahrzeug, an dem der Boden (10) montiert ist, die von dem Längsträger übertragenden Kräfte in dem Verbundwerkstoff zu verteilen.

## Claims

1. Motor vehicle floor (10), **characterized in that** it comprises a main panel (20) made of composite material, the panel (20) comprising two lateral supports (40) intended to be fixed to side members (50), the profile of the panel (20) forming a step at each lateral support (40), the panel (20) further comprising ribs (33) extending between one lateral support (40) and the other lateral support (40), the ribs (33) of the floor extending vertically downward from a lower surface of the main panel (20).

2. Floor (10) according to the preceding claim, wherein the panel (20) forms at least one podium (30) that is raised relative to the lateral supports (40), the podium (30) connecting the lateral supports by one or more lateral flanks (25) and being suitable to serve as a seat installation area.

3. Floor (10) according to the preceding claim, wherein the lateral flanks (25) each run alongside a motor vehicle side member when the lateral supports are fixed to the side members (50) of a motor vehicle.

4. Floor (10) according to any of the preceding claims, wherein the main panel (20) is made of a single-layer composite material.

5. Floor according to any of the preceding claims, wherein at least one of the ribs (33) extends transversely across a vehicle when the floor is mounted on a motor vehicle.

6. Floor (10) according to any of claims 2 to 5, wherein at least one rib (33) extends from one lateral flank (25) to the other of the floor (10).

7. Floor (10) according to any of claims 2 to 6, wherein at least one recess (32) extends from one lateral flank (25) to the other of the floor (10).

8. Floor (10) according to any of the preceding claims which comprises a central tunnel (60).

9. Floor (10) according to the preceding claim, wherein the ribs (33) wrap around the central tunnel (60).

10. Floor (10) according to claims 7, 8 and/or 9, wherein the recesses (32) wrap around the central tunnel (60).

11. Floor (10) according to any of the preceding claims, wherein the ribs (33) are suitable for diffusing the forces transmitted by the side member into the composite material in the event of a side impact sustained by the vehicle on which the floor (10) is mounted.

12. Floor (10) according to any of claims 9 to 11, wherein the recesses (32) are suitable for diffusing the forces transmitted by the side member into the composite material in the event of a side impact sustained by the vehicle on which the floor (10) is mounted.
